# EUROPÄISCHE PATENTSCHRIFT

(11) **EP 3 441 397 B1**
(45) Veröffentlichungstag und Bekanntmachung des Hinweises auf die Patenterteilung: **09.10.2019**
(21) Anmeldenummer: 17185524.0
(22) Anmeldetag: 09.08.2017
(51) Int. Cl.: C07F 15/00, C07F 7/18

(54) **VERFAHREN ZUR HERSTELLUNG VON 3-GLYCIDYLOXYPROPYLTRIALKOXYSILANEN**
METHOD FOR THE PREPARATION OF 3-GLYCIDYLOXYPROPYLTRIALKOXYSILANES
PROCÉDÉ DE FABRICATION DE 3-GLYCIDYLOXYPROPYL TRIALKOXYSILANE

(43) Veröffentlichungstag der Anmeldung: 13.02.2019
(73) Patentinhaber: Evonik Degussa GmbH, 45128 Essen (DE)
(72) Erfinder: Rudek, Markus, 79639 Grenzach-Wyhlen (DE); Witzsche, Susann, 79618 Rheinfelden (DE); Bade, Stefan, 68220 Michelbach Le Haut (FR); Drescher, Claudia, 79539 Lörrach (DE); John, Burkhard, 79618 Rheinfelden (DE); Peterle, Torsten, 79618 Rheinfelden (DE)
(74) Vertreter: Evonik Patent Association

(56) Entgegenhaltungen:
- EP-A1- 2 114 963

## Beschreibung

Die Erfindung betrifft ein Verfahren zur Herstellung von 3-Glycidyloxypropyltrialkoxysilanen durch Hydrosilylierung von Allylglycidylether in Gegenwart eines Pt-basierten Homogenkatalysators und 2-Ethylhexansäure und/oder Isononansäure als Promotor.

Glycidylfunktionelle Silane sind wichtige technische Zwischen- oder Endprodukte in der Organosilanchemie. Sie finden ihren Einsatz als Haftvermittler bei Verbundmaterialien, z. B. in der Lack- und Glasfaserindustrie, in der Gießereitechnik und der Klebstoffindustrie; eine wichtige Rolle spielen besagte Verbindungen auch bei der Beschichtung von optischen Gläsern.

Die Herstellung von 3-Glycidyloxypropylalkoxysilanen erfolgt beispielsweise durch Umsetzung eines ein Wasserstoffatom tragenden Trialkoxysilans mit Allylglycidylether in Gegenwart eines Hydrosilylierungskatalysators und kann durch folgende allgemeine Reaktionsgleichung beschrieben werden:

CH₂(O)CHCH₂OCH₂CH=CH₂ + HSi(OR)₃ → CH₂(O)CHCH₂OC₃H₆Si(OR)₃

mit R = Alkyl, z. B. Methyl, Ethyl, Propyl. So werden mit R = Methyl die Herstellung von 3-Glycidyloxypropyltrimethoxysilan und mit R = Ethyl die Herstellung von 3-Glycidyloxypropyltriethoxysilan beschrieben. Als Nebenprodukte entstehen dabei Isomere, CH₂(O)CHCH₂OCH₂CH(Si(OR)₃)CH₃ sowie ein entsprechender 8-gliedriger Heterocyclus, weiterhin Glycidyloxytrialkoxysilan, Propyltrialkoxysilan, Propenylglycidylether und Tetraalkoxysilan, neben Hochsiederkomponenten. Insbesondere die destillativ schwer abtrennbaren Verbindungen, isomeres Glycidyloxypropyltrialkoxysilan und der 8-gliedrige Heterocyclus erfordern hohe Trennleistungen in einer Destillationskolonne und lange Destillationszeiten. Die Bildung entsprechender Propenylglycidylether und die Bildung von Tetraalkoxysilan stellen hohe Selektivitätsverluste dar.

Hydrosilylierungsreaktionen von H-Silanen mit Verbindungen, die eine C=C-Doppelbindung enthalten, werden entweder diskontinuierlich oder kontinuierlich durchgeführt, wobei die Hydrosilylierungsreaktion in der Regel durch Edelmetalle katalysiert wird. Die Herstellung von 3-Glycidyloxypropyltrialkoxysilanen erfolgt üblicherweise homogenkatalytisch mit einem Speier-Katalysator, H₂PtCl₆, oder einem Karstedt-Katalysator, Divinyltetramethyldisiloxan-Pt (u.a. EP 0 277 023, EP 0 288 286, JP 128763 und DE 2 159 991), sie kann aber auch heterogenkatalytisch mit Edelmetallen erfolgen (EP 0 548 974, US-Patent 4 736 049).

Führt man die Hydrosilylierung von Allylglycidylether mit Trimethoxysilan in Gegenwart eines homogenen Pt-Katalysators durch, ist zu beobachten, dass ein nicht zu vernachlässigender Anteil des eingesetzten Allylglycidylethers isomerisiert wird und damit für die Hydrosilylierung nicht mehr zur Verfügung steht. Dies verursacht in der Regel beträchtliche Selektivitätsverluste.

Ein weiterer Nachteil der bisherigen homogenen Katalysatoren ist die Bildung von kolloidalem Pt, welches ebenfalls zu einer erhöhten Nebenproduktbildung führt. Insbesondere bei Homogenkatalysatoren vom Karstedt-Typ wird die Bildung von kolloidalem Pt beobachtet. Neben einer Verminderung der Zielproduktselektivität kommt es zur Isomerisierung des eingesetzten Olefins, welches nach Isomerisierung für die Hydrosilylierung nicht mehr zur Verfügung steht.

Aus EP 1 694 687 ist ein Verfahren zur Herstellung Fluoralkylgruppen tragender Siliciumverbindungen durch Hydrosilylierung eines Fluorolefins in Gegenwart eines Pt-Katalysators zu entnehmen, wobei u.a. die Reinheit des eingesetzten Olefins zu beachten war.

SU 415268 lehrt, Aminoalkylsilane durch Hydrosilylierung von Allylamin herzustellen, wobei auch diese Umsetzung in Gegenwart eines Katalysators und unter Zusatz einer
Säure als Promotor, u.a. Essigsäure, durchgeführt wird.

Ferner offenbart EP 0 985 675 den Einsatz einer Säure als Promotor bei der Hydrosilylierung eines Kohlenwasserstoffolefins zur Herstellung von Alkylsilanen. In EP 0 985 675 wird Essigsäure als bevorzugte Säure angeführt, vgl. auch US 5,986,124.

Es ist allgemein bekannt, dass sich ein Oxiran-Ring (vgl. auch den Oxiran-Ring in Epoxy- sowie Glycidyloxyfunktionen) in der Regel unter Einfluss einer Säure öffnet und so eine sehr reaktive Spezies darstellt. Die Öffnung des Oxiran-Rings erfolgt hierbei sowohl durch Säurekatalyse als auch durch beliebige andere Nucleophile. (S. Hauptmann, "Organische Chemie", 1. Aufl. 1985, VEB Verlag für Grundstoffindustrie, Leipzig, Seiten 558ff).

EP 2 114 963 zeigt, dass die Herstellung von Glycidyloxyalkylalkoxysilanen durch Hydrosilylierung eines Olefinglycidethers in Gegenwart eines Pt-Katalysators, eines geeigneten Löse- bzw. Verdünnungsmittels und dem Zusatz von Essigsäure unter wohl definierten Bedingungen hinsichtlich Selektivität und Erhalt des Oxiran-Rings vorteilhaft durchgeführt werden kann. Im großtechnischen Maßstab zeigt sich jedoch, dass Essigsäure bzw. entsprechende Acetoxyverbindungen -wie und warum auch immer- zumindest anteilig auch im Endprodukt zu finden sind, was zu höheren Aciditäten im Produkt führt, was wiederum bei der einen oder anderen Applikation des Produkts Schwierigkeiten bereitet. Handelsüblich werden in der Regel lösemittelhaltige Karstedt-Katalysatoren, zum Beispiel in Xylol als 2%ige Lösung, angeboten.

Der vorliegenden Erfindung lag die Aufgabe zugrunde, ein industrielles Verfahren zur Herstellung von 3-Glycidyloxypropylalkoxysilanen unter Einsatz eines Pt-haltigen Homogenkatalysators, insbesondere eines Karstedt-Katalysators, bereitzustellen, das die oben dargelegten Nachteile nicht aufweist und die Selektivitäts- sowie Ausbeutevorteile zumindest der Größenordnung nach erhalten bleiben. Ein besonderes Anliegen war es, ein Produkt bereitzustellen, das frei von Essigsäure oder vergleichbar aciden, flüchtigen Promotoren und auch im Wesentlichen frei von organischem Lösemittel, insbesondere Kohlenwasserstoffen ist.

Die Aufgabe wird erfindungsgemäß entsprechend den Merkmalen in den Patentansprüchen gelöst.

So wurde in überraschender Weise gefunden, dass man in vorteilhafter Weise durch Umsetzung
(i) eines funktionalisierten Alkens [nachfolgend auch kurz als Olefinkomponente bezeichnet] der allgemeinen Formel (II)

   (R')O-C₃H₅ (II),

   worin R' eine H₂C(O)CHCH₂- Gruppe (so genannte Glycidylgruppe) darstellt, [auch Allylglycidylether bzw. kurz AGE genannt],
   mit
(ii) mindestens einem Hydrogenalkoxysilan der allgemeinen Formel (III)

   HSi(OR)₃ (III),

   worin Gruppen R unabhängig für eine Methyl- oder Ethylgruppe stehen, vorzugsweise Hydrogentrimethoxysilan [kurz TMOS genannt] oder Hydrogentriethoxysilan [kurz TEOS genannt],
   in Gegenwart
(iii) eines Karstedt-Katalysators oder eines Katalysators auf Basis von Hexachlorplatinsäure als Homogenkatalysator und
(iv) von 2-Ethylhexansäure (Sdp. 226-229°C) und/oder Isononansäure (Sdp. 232-236°C) umsetzt und
   man vorteilhaft in einfacher und wirtschaftlicher Weise ein 3-Glycidyloxypropylalkoxysilan der allgemeinen Formel (I)

   (R')O-(CH₂)₃-Si(OR)₃ (I),

   worin Gruppen R unabhängig für eine Methyl- oder Ethylgruppe stehen und R' eine Glycidylgruppe H₂C(O)CHCH₂- darstellt, als (Ziel-)Produkt der Hydrosilylierung gemäß Formel I unter Erhalt der Glycidylfunktion und frei von Essigsäure bzw. Acetoxygruppen und im Wesentlichen frei von organischem Lösemittel gewinnt.

Gegenstand der vorliegenden Erfindung ist somit ein Verfahren zur Herstellung von 3-Glycidyloxypropylalkoxysilanen der allgemeinen Formel (I)

(R')O-(CH₂)₃-Si(OR)₃ (I),

worin Gruppen R unabhängig für eine Methyl- oder Ethylgruppe stehen und R' eine Gruppe H₂C(O)CHCH₂- darstellt,
indem man
(i) ein funktionalisiertes Alken [nachfolgend auch kurz als Olefinkomponente bezeichnet] der allgemeinen Formel (II)

   (R')O-C₃H₅ (II),

   worin R' eine Gruppe H₂C(O)CHCH₂- darstellt,
   [auch Allylglycidylether bzw. kurz AGE genannt],
   mit
(ii) mindestens einem Hydrogenalkoxysilan der allgemeinen Formel (III)

   HSi(OR)₃ (III),

   worin Gruppen R unabhängig für eine Methyl- oder Ethylgruppe stehen, vorzugsweise Hydrogentrimethoxysilan [kurz TMOS genannt] oder Hydrogentriethoxysilan [kurz TEOS genannt],
   in Gegenwart
(iii) eines Karstedt-Katalysators oder eines Katalysators auf Basis von Hexachlorplatinsäure als Homogenkatalysator und
(iv) von 2-Ethylhexansäure und/oder Isononansäure
umsetzt und
das (Ziel-)Produkt der Hydrosilylierung gewinnt.

Beim erfindungsgemäßen Verfahren setzt man die Olefinkomponente gemäß (i) und das Hydrogenalkoxysilan gemäß (ii) in einem molaren Verhältnis von 0,8 bis 1,3 zu 1, vorzugsweise 1,03 bis 1,25 zu 1, besonders vorzugsweise 1,07 bis 1,22 zu 1, ganz besonders vorzugsweise 1,10 bis 1,19 zu 1, insbesondere von 1,12 bis 1,17 zu 1,0 ein.

Weiter setzt man beim erfindungsgemäßen Verfahren einen Karstedt-Katalysator gemäß (iii) als solchen (Platinum(0)-1,3-divinyl-1,1,3,3-tetramethyldisiloxan-Komplex; O[Si(CH₃)₂CH=CH₂]₂Pt) oder Hexachlorplatinsäure (H₂[PtCl_{6]}], auch "Speier-Katalysator" genannt) und ohne den Zusatz bzw. die Verwendung eines zusätzlichen Lösemittels ein.

Vorteilhaft stellt man beim erfindungsgemäßen Verfahren den Pt-Gehalt (gerechnet als metallisches Platin) im Reaktionsgemisch bevorzugt auf 1,2 bis 3 Gew.-ppm, besonders bevorzugt 1,5 bis 2,5 Gew.-ppm, insbesondere 1,7 bis 2,3 Gew.-ppm, bezogen auf die gesamte Reaktionsmasse, d.h. die Summe der Mengen der zur Durchführung der Umsetzung eingesetzten Komponenten (i), (ii), (iii) und (iv), ein.

Dabei setzt man den Katalysator gemäß (iii) bzgl. seines Pt-Gehalts (gerechnet als metallisches Platin) zur Olefinkomponente gemäß (i) vorteilhaft in einem molaren Verhältnis von 1 : 2 000 000 bis 1 : 50 000, vorzugsweise 1 : 1 000 000 bis 1 : 100 000, besonders vorzugsweise 1 : 750 000 bis 1 : 150 000, insbesondere 1 : 600 000 bis 1 : 300 000, ein.

Ferner setzt man beim erfindungsgemäßen Verfahren den Pt-Anteil (gerechnet als metallisches Platin) des Katalysators gemäß (iii) und die 2-Ethylhexansäure und/oder Isononansäure als Promotor(en) gemäß (iv) in einem molaren Verhältnis von 1 : 250 bis 1 : 25 000, vorzugsweise 1 : 500 bis 1 : 10 000, insbesondere 1 : 1 000 bis 1 : 5 000, ein. Dabei ist besonders vorteilhaft, dass die zuvor genannten Promotoren, 2-Ethylhexansäure (Sdp. 226-229°C) und/oder Isononansäure (Sdp. 232-236°C), bei Raumtemperatur und auch unter Reaktionsbedingungen flüssig vorliegen. Daher können die 2-Ethylhexansäure und/oder die Isononansäure, einschließlich eines Gemischs aus 2-Ethylhexansäure und Isononansäure, in einfacher Weise dosiert werden. So liegt die eingesetzte 2-Ethylhexansäure bzw. Isononansäure oder deren Gemisch auch im Reaktionsgemisch gelöst vor, d.h. unter Reaktionsbedingungen treten vorteilhaft keine Ausfällungen an Promotoren auf, so dass auch auf den Einsatz eines Lösemittels geeigneterweise verzichtet werden kann. Unter Isononansäure wird in der vorliegenden Anmeldung insbesondere ein Gemisch aus im Wesentlichen verzweigten C9-Carbonsäuren verstanden, bevorzugter Hauptbestandteil ist dabei die 3,5,5-Trimethylhexansäure, d.h. die erfindungsgemäß eingesetzte Isononansäure weist einen "Sdp." bzw. Siedebereich von 232 bis 236°C (Normaldruck) auf. Ferner wird unter 2-Ethylhexansäure insbesondere ein Gemisch aus im Wesentlichen verzweigten C8-Carbonsäuren verstanden, wobei 2-Ethylhexansäure die bevorzugte Hauptkomponente darstellt, d.h. die erfindungsgemäß eingesetzte 2-Ethylhexansäure weist einen "Sdp." bzw. Siedebereich von 226 bis 229°C (Normaldruck) auf. Darüber hinaus sind 2-Ethylhexansäure sowie Isononansäure in industrieller Größenordnung bzw. Mengen im Markt vorteilhaft verfügbar. Ausgenommen als Promotoren sind somit ausdrücklich Carbonsäuren mit einem Siedepunkt bzw. Siedebereich unterhalb 220°C (Normaldruck), aromatische Carbonsäuren, Dicarbonsäuren sowie im Wesentlichen reine unverzweigte Carbonsäuren als solche.

Beim erfindungsgemäßen Verfahren setzt man den Promotor in Form von 2-Ethylhexansäure und/oder Isononansäure bevorzugt mit 0,05 bis 2 Gew.-%, besonders vorzugsweise 0,1 bis 1,5 Gew.-%, insbesondere 0,2 bis 1,2 Gew.-%, bezogen auf die gesamte Reaktionsmasse, d.h. die Summe der Mengen der zur Durchführung der Umsetzung eingesetzten Komponenten (i), (ii), (iii) und (iv), ein.

Geeigneterweise führt man das erfindungsgemäße Verfahren durch indem man
- gemäß der Verfahrensvariante A die Komponenten (i), (ii), (iii) und (iv) vormischt, einem Reaktor bzw. Reaktorsystem (zur Begrifflichkeit siehe unten) zur Durchführung der Reaktion zuführt und unter Durchmischung auf eine Reaktionstemperatur aufheizt oder
- gemäß der Verfahrensvariante B die Komponenten gemäß (i), (iii) und (iv) in einem Reaktor bzw. Reaktorsystem vorlegt bzw. diesem zuführt, unter Durchmischung auf eine Reaktionstemperatur aufheizt und Komponente (ii) unter Durchmischung zudosiert oder
- gemäß der Verfahrensvariante C die Komponenten gemäß (i) und (ii) in einem Reaktor bzw. Reaktorsystem vorlegt bzw. diesem zuführt, unter Durchmischung auf eine Reaktionstemperatur aufheizt und die Komponenten (iii) und (iv) als solche oder als Gemisch unter Durchmischung zudosiert oder
- gemäß der Verfahrensvariante D die Komponenten gemäß (ii), (iii) und (iv) und in einem Reaktor bzw. Reaktorsystem vorlegt bzw. diesem zuführt, unter Durchmischung auf eine Reaktionstemperatur aufheizt und die Komponente (i) unter Durchmischung zudosiert.

Vorzugsweise führt man beim erfindungsgemäßen Verfahren die Umsetzung in einem Reaktor, vorzugsweise in einem Rührkessel, bei einer Reaktionstemperatur zwischen 80 und 230°C, vorzugsweise 100 bis 200°C, einem Druck von 0,5 und 20 bar abs., vorzugsweise 0,5 bis 4 bar abs., insbesondere bei Umgebungsdruck durch.

Weiter führt man das erfindungsgemäße Verfahren durch indem man das Umsetzungsprodukt, d.h. das nach erfolgter Umsetzung erhaltene Produktgemisch aufarbeitet, wobei man das nach der Umsetzung erhaltene Produktgemisch (auch kurz Rohprodukt genannt) zur Gewinnung des Zielprodukts fraktioniert destilliert, vorzugsweise in einer Destillationsapparatur bzw. -einheit unter vermindertem Druck.

So erhält man nach dem erfindungsgemäßen Verfahren vorteilhaft ein 3-Glycidyloxypropyltrimethoxysilan oder 3-Glycidyloxypropyltriethoxysilan, wobei das gewonnene Produkt einen pH-Wert von 3,5 bis 5,5, vorzugsweise 4 bis 5, aufweist. Ferner weist ein so gewonnenes 3-Glycidyloxypropyltrimethoxysilan oder 3-Glycidyloxypropyltriethoxysilan vorteilhaft einen Leitfähigkeitswert von ≤10 µS/cm, vorzugsweise 0,0001 bis ≤ 0,005 mS/cm, besonders vorzugsweise 0,001 bis ≤ 0,004 mS/cm, auf.

So zeichnen sich solche erfindungsgemäß erhaltenen 3-Glycidyloxypropyltrimethoxy- bzw. -triethoxysilane beispielsweise auch durch eine Verbesserung der Applikations-eigenschaften in Kleb- und Dichtmassen aus.

Daher ist auch Gegenstand der vorliegenden Erfindung ein 3-Glycidyloxypropyltrimethoxysilan oder 3-Glycidyloxypropyltriethoxysilan, das nach dem erfindungsgemäßen Verfahren erhalten wird bzw. erhältlich ist und sich durch einen pH-Wert von 3,5 bis 5,5, vorzugsweise 4 bis 5, sowie durch einen Leitfähigkeitswert von ≤10 µS/cm, vorzugsweise 0,0001 bis ≤ 0,005 mS/cm, besonders vorzugsweise 0,001 bis ≤ 0,004 mS/cm, auszeichnet.

Im Allgemeinen kann man das erfindungsgemäße Verfahren wie folgt durchführen:
Geeigenterweise nutzt man als Anlage zur Durchführung des vorliegenden Verfahrens einen Rührkessel, eine Rührkesselkaskade, einen mikrostrukturierten Reaktor (auch kurz Mikroreaktor genannt), einen Rohr- bzw. Durchflußreaktor, einen so genannten Loop- bzw. Schlaufenreaktor oder eine Kombination bzw. Verschaltung von mindestens zwei der zuvor genannter Reaktoren (vorangehend und nachfolgend auch als Reaktor oder Reaktorsystem bezeichnet) der beheizbar sowie kühlbar ausgeführt sein kann, geeigneterweise über eine Rühr- bzw. Verwirbelungsvorrichtung, mindestens eine Dosiervorrichtung sowie gegebenenfalls eine Rückflusskühlung sowie eine nachgeschaltete Destillationsapparatur/-einheit, verfügt und unter Inertgas, beispielsweise Stickstoff, sowie unter vermindertem oder höheren Druck als Normal- bzw. Umgebungsdruck betrieben werden kann. Geeigneterweise spült man die Reaktions- sowie Destillationsapparatur vor der Benutzung mit getrocknetem Stickstoff.
Zur Durchführung des erfindungsgemäßen Verfahrens können verschieden Verfahrensvarianten zur Anwendung kommen.
- So kann man die Komponenten (i), (ii), (iii) und (iv) vormischen, dem Reaktor bzw. Reaktorsystem zur Durchführung der Reaktion zuführen und unter aktiver oder nicht erzwungener Durchmischung, vorangehend und nachfolgend kurz unter Durchmischung genannt, auf eine Reaktionstemperatur aufheizen, beispielsweise unter Beobachtung des Reaktionsverlaufs auf eine Temperatur im Bereich von 40 bis 250°C, oder
- man kann die Komponenten gemäß (i), (iii) und (iv) im Reaktor bzw. Reaktorsystem vorlegen bzw. diesem zuführen, unter Durchmischung auf eine Reaktionstemperatur aufheizen und die Komponente (ii) unter Durchmischung dem bereits vorliegenden Komponentengemisch zudosieren, wobei man unter Beobachtung der Reaktion beispielsweise auf eine Temperatur im Bereich von 40 bis 250°C einstellt bzw. nachregelt, oder
- man kann aber auch die Komponenten gemäß (i) und (ii) im Reaktor vorlegen bzw. dem Reaktor bzw. Reaktorsystem zuführen, unter Durchmischung auf eine Reaktionstemperatur aufheizen, beispielsweise auf eine Temperatur im Bereich von 40 bis 250°C und die Komponenten (iii) und (iv) als solche, d.h. einzeln bzw. unabhängig voreinander, oder als Gemisch unter Durchmischung dem bereits vorliegenden Komponentengemisch zudosieren, wobei man unter Beobachtung der Reaktion beispielsweise auf eine Temperatur im Bereich von 40 bis 250°C einstellt bzw. nachregelt oder

- man kann die Komponeneten gemäß (ii), (iii) und (iv) in einem Reaktor bzw. Reaktorsystem vorlegen bzw. diesem zuführen, unter Durchmischung auf eine Reaktionstemperatur aufheizen, beispielsweise auf eine Temperatur im Bereich von 40 bis 250°C, und die Komponente (i) unter Durchmischung dem bereits vorliegenden Komponentengemisch zudosieren, wobei man unter Beobachtung der Reaktion beispielsweise auf eine Temperatur im Bereich von 40 bis 250°C einstellt bzw. nachregelt.
Die Umsetzung des Reaktionsgemischs bzw. der im Reaktor entsprechend vorliegenden Reaktionskomponenten führt man bevorzugt bei einer Temperatur im Bereich von 100 bis 220°C durch und lässt das so erhaltene Produktgemisch geeignerterweise noch einige Zeit unter Durchmischung nachreagieren, beispielsweise bis zu 2 Stunden -aber nicht ausschließlich-, geeigneterweise 1 bis 30 Minuten, bevor man das Produktgemisch (Rohprodukt) gegebenenfalls in eine gesonderte Destillationseinheit überführt und geeigneterweise unter schonenden Bedingungen, vorzugsweise unter vermindertem Druck (Vakuum), in einer fraktioniert durchgeführten Destillation aufarbeitet, wobei man das Zielprodukt der Umsetzung, 3-Glycidyloxypropyltrimethoxysilan (Sdp. 248°C) oder 3-Glycidyloxypropyltriethoxysilan [Sdp. 120 °C/2 mmHg], in hoher Reinheit als Kopfprodukt gewinnt.
Beim erfindungsgemäßen Verfahren kann man die Umsetzung und Aufarbeitung vorteilhaft batchweise oder kontinuierlich durchführen.

So kann man nach dem erfindungsgemäßen Verfahren 3-Glycidyloxypropyltrimethoxysilan oder 3-Glycidyloxypropyltriethoxysilan auch in einem industriellen Maßstab mit ausgezeichneter Selektivität und mit sehr hoher Ausbeute, d.h. in besonders wirtschaftlicher Weise, und insbesondere in Essigsäure- bzw. Acetoxy-freier Form sowie frei von organischem Lösemittel vorteilhaft gewinnen.

Die vorliegende Erfindung wird durch die nachfolgenden Beispiele näher erläutert, ohne den Gegenstand der Erfindung zu beschränken.

### Beispiele

### Einsatzstoffe/Abkürzungen:

Karstedt-Katalysator: Fa. Heraeus , Pt-Gehalt 20,42 Gew.-%
Essigsäure, Fa. Sigma-Aldrich; Reinheit ≥ 99%
Propionsäure, Fa. Merck; Reinheit: ≥ 99%
Benzoesäure, Fa. Carl Roth; Gehalt 99,5 -100,5%
Heptansäure, Fa. TCI; Reinheit: >98%
2-Ethylhexansäure, Fa. ABCR; Reinheit: 99% (kurz 2-EHsre. genannt)
3,5,5-Trimetylhexansäure (Isononansäure), Fa. TCI; Reinheit: 99%
Decansäure, Fa. Merck; Reinheit ≥ 98%
Dodecansäure, Fa. Acros Organics; Reinheit 98%

| | |
|---|---|
| Sre. | Abkürzung für "Säure" |
| TMOS | = Trimethoxysilan, Reinheit: 98% |
| AGE | = Allylglycidylether, Fa. Sigma-Aldrich, Reinheit: >99% |
| DYN M | = Tetramethoxysilan |
| AGE | = Allylglycidylether |
| cis-iso-AGE | = cis-Propenylglycidylether |
| trans-iso-AGE | = trans-Propenylglycidylether |
| iso-GLYMO | = 2-Glycidyloxy-1-methyl-ethyltrimethoxysilan |
| cyclo-GLYMO | = 1-Di-methoxy-sila-2,5-dioxa-3-methoxy-methyl-cyclooctan |
| GLYMO | = 3-Glycidyloxypropyltrimethoxysilan |
| HS | = Hochsieder |

### Analysenmethoden:

### Bestimmung von Produktzusammensetzungen mittels Gaschromatographie:

Zusammensetzung Roh-Probe (Probe aus dem Rohprodukt nach Umsetzung)
Gerät: 6850 Network GC System
Säule:19095J-123E HP5; 30m/0,53mm/2,65µm
Temperatur-Programm: 75°C-3min-10°C/min-275°C-15min
Zusammensetzung Rein-Probe (Probe aus dem Produkt nach Aufarbeitung)
Gerät: 7820A GC System
Säule: 19091J-413 HP5; 30m/0,32mm/0,25µm
Temperatur-Programm: 75°C-3min-10°C/min-275°C-25min

### Leitfähigkeitsmessung:

Gerät: 712 Conductometer von Metrohm
Methode: SAA-1833; in µS/cm; Toluol (Fa. Merck z. A. ≥ 99%) wird mit Bi-Dest. Wasser 30min geschüttelt. Die wässrige Phase wird gemessen. SAA-1834; in mS/cm; 2% Probe (in Bi-Dest. Wasser verdünnt) 1h stehen lassen, dann messen.

### pH-Wert-Bestimmung:

Gerät: 827 pH lab von Metrohm
Methode: SAA-0268; 10g Probe plus 90ml Bi-Dest. Wasser, 10min rühren, dann messen.

### Vergleichsbeispiel 1: (gemäß EP 2 114 963)

Allylglycidylether wurde mit Trimethoxysilan zu 3-Glycidyloxypropyltrimethoxysilan kontinuierlich umgesetzt. Die Reaktion erfolgte kontinuierlich in einen Rohrreaktor durch Einspeisung der Rohstoffe (Allylglycidylether: 9,6 kg/h und Trimethoxysilan: 8 kg/h) zusammen mit dem Pt-Karstedt-Katalysator in Gegenwart von Essigsäure (0,05 Gew.-%, bezogen auf die gesamte Reaktionsmasse). Die auf metallisches Platin bezogene Konzentration des Katalysators betrug dabei 2 ppm. Dabei wurde der Pt-Karstedt-Katalysator in 3-Glycidyloxypropyltrimethoxysilan gelöst. Die Reaktionstemperatur lag bei ca. 160 °C. Die Reaktion wurde mit einem Überschuss an Allylglycidylether gefahren (molares Verhältnis: Allylglycidylether: Trimethoxysilan = 1,28 : 1). Das nach Umsetzung erhaltene Produktgemisch setzte sich zusammen aus:

| TMOS | DYN M | AGE | cis-iso-AGE | trans-iso-AGE | iso-GLYMO | cyclo-GLYMO | GLYMO | HS |
|---|---|---|---|---|---|---|---|---|
| [%] | [%] | [%] | [%] | [%] | [%] | [%] | [%] | [%] |
| 0,2 | 0,4 | 0,4 | 6,4 | 3 | 0,3 | 0,1 | 87,3 | 1,9 |

Die Bestimmung der Zusammensetzung des nach Umsetzung erhaltenen Produktgemischs erfolgte mittels Gaschromatographie.
Das vorliegende Produktgemisch wurde zur Gewinnung des Endprodukts destilliert, wobei der Gehalt an Essigsäure nach Destillation noch bei rd 200 Gew.-ppm lag.

Führt man das zuvor beschriebene Verfahren ohne den Einsatz von Essigsäure als Promotor durch, erzielt man folgende Reaktions- bzw. Rohproduktzusammensetzung.

| TMOS | DYN M | AGE | cis-iso-AGE | trans-iso-AGE | iso-GLYMO | cyclo-GLYMO | GLYMO | HS |
|---|---|---|---|---|---|---|---|---|
| [%] | [%] | [%] | [%] | [%] | [%] | [%] | [%] | [%] |
| 0,3 | 1,15 | 1,7 | 6,35 | 6,35 | 1,1 | 0,15 | 81 | 1,9 |

Die Vorteile des homogenen Pt-Katalysators in Gegenwart von Essigsäure in Kombination mit der Verwendung des Zielprodukts als Löse- bzw. Verdünnungsmittels sind die Selektivität bezüglich des Zielprodukts (GLYMO) sowie der Verringerung des Anteils an Iso-Produkt und Cyclo-Produkt und die Zurückdrängung der Isomerisierung der eingesetzten olefinischen Verbindung. Die verringerte Nebenproduktbildung führt ferner zu einer leichteren Destillierbarkeit des Rohprodukts und zu einer Qualitätssteigerung, d. h. es ist eine geringere Trennleistung erforderlich und kürzere Destillationszeiten im Destillationsbatch, wenn Iso- und Cyclo-Produkt in geringeren Mengen vorhanden sind.

### Weitere Versuchsdurchführung:

Die folgenden Versuche (Vergleichsversuche 2 bis 7 sowie die erfindungsgemäßen Versuche 1 bis 8) wurden wie folgt durchgeführt:
AGE, TMOS, Säure und Karstedt-Katalysator wurden in einem Rührreaktor vorgelegt. Das Reaktionsgemisch wurde unter Rühren innerhalb von ca. 30 min. auf 100°C (Sumpftemperatur) aufgeheizt. Nach Erreichen der Sumpftemperatur von 100 °C wurde das Reaktionsgemisch für weitere 90 Min. auf 100 °C gehalten. Danach erfolgte die Abkühlung des Reaktions- bzw. Produktgemischs und anschließende Probenahme (so genannte Roh-Probe).

Das erhaltene Rohprodukt wurde anschließend unter produktschonenden Bedingungen (Vakuum) fraktioniert destilliert und das Zielprodukt als Kopfprodukt gewonnen.

### Vergleichsbeispiel 2:

Ohne Säurezusatz
- ohne org. Lösemittel
- AGE/TMOS [mol/mol] = 1,2/1
- Pt-Konz. = 2 Gew.-ppm (bezogen auf die gesamte Reaktionsmasse)

Das nach Umsetzung erhaltene Produktgemisch hatte die folgende Zusammensetzung:

| TMOS | DYN M | AGE | cis-iso-AGE | trans-iso-AGE | iso-GLYMO | cyclo-GLYMO | GLYMO | HS |
|---|---|---|---|---|---|---|---|---|
| [%] | [%] | [%] | [%] | [%] | [%] | [%] | [%] | [%] |
| 1,6 | 0,7 | 1,7 | 5,2 | 6,1 | 1,2 | 0,2 | 81,7 | 1,1 |

Dieses Rohprodukt weist nur eine Ausbeute von 81,7 % bzgl. des Zielprodukts GLYMO auf sowie einen vergleichsweise deutlichen Anteil von 1,2 % an iso-GLYMO, d.h. vergleichsweise geringerer Selektivität.

### Vergleichsbeispiel 3:

Mit Zusatz von Essigsäure
- ohne org. Lösemittel
- AGE/TMOS [mol/mol] = 1,2/1
- Essigsäure, Konz. = 0,23 Gew.-% (bezogen auf die gesamte Reaktionsmasse)
- Pt-Konz. = 2 Gew.-ppm (bezogen auf die gesamte Reaktionsmasse)

Das nach Umsetzung erhaltene Produktgemisch hatte die folgende Zusammensetzung:

| TMOS | DYN M | AGE | cis-iso-AGE | trans-iso-AGE | iso-GLYMO | cyclo-GLYMO | GLYMO | HS |
|---|---|---|---|---|---|---|---|---|
| [%] | [%] | [%] | [%] | [%] | [%] | [%] | [%] | [%] |
| 0,7 | 0,8 | 0,4 | 7,5 | 3,4 | 0,3 | 0,02 | 85,2 | 0,9 |

Dieses Rohprodukt weist einen unerwünschten Anteil an Essigsäure auf.

### Vergleichsbeispiel 4:

Mit Zusatz von Propionsäure
- ohne org. Lösemittel
- AGE/TMOS [mol/mol] = 1,2/1
- Propionsäure, Konz. = 0,23 Gew.-% (bezogen auf die gesamte Reaktionsmasse)
- Pt-Konz. = 2 Gew.-ppm (bezogen auf die gesamte Reaktionsmasse)

Das nach Umsetzung erhaltene Produktgemisch hatte die folgende Zusammensetzung:

| TMOS | DYN M | AGE | cis-iso-AGE | trans-iso-AGE | iso-GLYMO | cyclo-GLYMO | GLYMO | HS |
|---|---|---|---|---|---|---|---|---|
| [%] | [%] | [%] | [%] | [%] | [%] | [%] | [%] | [%] |
| 0,05 | 0,6 | 0,3 | 7,6 | 3,5 | 0,3 | 0,03 | 85,9 | 0,9 |

Leider weist dieses Rohprodukt einen Anteil an acider Propionsäure auf, was sich wie beim Einsatz von Essigsäure bei einigen späteren Produktapplikationen des Endprodukts negativ auswirkt und somit für die industrielle Praxis ungeeignet ist.

### Vergleichsbeispiel 5:

Mit Zusatz von Benzoesäure
- mit 0,8 Gew.-% MeOH als Lösemittel, da nur in gelöster Form einsetzbar bezogen auf die gesamte Reaktionsmasse)
- AGE/TMOS [mol/mol] = 1,2/1
- Benzoesre.-Konz. = 0,23 Gew.-% (bezogen auf die gesamte Reaktionsmasse)
- Pt-Konz. = 2 Gew.-ppm (bezogen auf die gesamte Reaktionsmasse)

Das nach Umsetzung erhaltene Produktgemisch hatte die folgende Zusammensetzung:

| TMOS | DYN M | AGE | cis-iso-AGE | trans-iso-AGE | iso-GLYMO | cyclo-GLYMO | GLYMO | HS |
|---|---|---|---|---|---|---|---|---|
| [%] | [%] | [%] | [%] | [%] | [%] | [%] | [%] | [%] |
| 0,2 | 0,8 | 0,5 | 6,9 | 4,0 | 0,5 | 0,1 | 84,2 | 1,6 |

Beim Einsatz dieser aromatischen Carbonsäure geht sowohl die Selektivität, vgl. iso-GLYMO, als auch die Ausbeute an GLYMO zurück.

### Vergleichsbeispiel 6:

Mit Zusatz von Heptansäure
- ohne org. Lösemittel
- AGE/TMOS [mol/mol] = 1,2/1
- Heptansre.-Konz. = 0,23 Gew.-% (bezogen auf die gesamte Reaktionsmasse)
- Pt-Konz. = 2 Gew.-ppm (bezogen auf die gesamte Reaktionsmasse)

Das nach Umsetzung erhaltene Produktgemisch hatte die folgende Zusammensetzung:

| TMOS | DYN M | AGE | cis-iso-AGE | trans-iso-AGE | iso-GLYMO | cyclo-GLYMO | GLYMO | HS |
|---|---|---|---|---|---|---|---|---|
| [%] | [%] | [%] | [%] | [%] | [%] | [%] | [%] | [%] |
| 0,2 | 0,6 | 0,3 | 7,1 | 3,9 | 0,5 | 0,1 | 85,7 | 1,2 |

Dabei ist festzustellen, dass die Selektivität zurückgeht, vgl. iso-GLYMO.

### Vergleichsbeispiel 7:

Mit Zusatz von Decansäure
- Mit 0,8 Gew.-% MeOH als Lösemittel (bezogen auf die gesamte Reaktionsmasse)
- AGE/TMOS [mol/mol] = 1,2/1
- Decansre.-Konz. = 0,23 Gew.-% (bezogen auf die gesamte Reaktionsmasse)
- Pt-Konz. = 2 Gew.-ppm (bezogen auf die gesamte Reaktionsmasse)

Da Decansäure auch bei Reaktionstemperatur fest ist, erfordert es den Einsatz eines Lösemittels. Das nach Umsetzung erhaltene Produktgemisch hatte die folgende Zusammensetzung:

| TMOS | DYN M | AGE | cis-iso-AGE | trans-iso-AGE | iso-GLYMO | cyclo-GLYMO | GLYMO | HS |
|---|---|---|---|---|---|---|---|---|
| [%] | [%] | [%] | [%] | [%] | [%] | [%] | [%] | [%] |
| 0,2 | 0,8 | 0,7 | 6,5 | 4,3 | 0,6 | 0,1 | 84,3 | 1,5 |

Auch hier ist festzustellen, dass die Selektivität zurückläufig ist, vgl. iso-GLYMO.

### Vergleichsbeispiel 8:

Mit Zusatz von Dodecansäure
- Mit 0,8 Gew.-% MeOH als Lösemittel (bezogen auf die gesamte Reaktionsmasse)
- AGE/TMOS [mol/mol] = 1,2/1
- Dodecansre.-Konz. = 0,23 Gew.-% (bezogen auf die gesamte Reaktionsmasse)
- Pt-Konz. = 2 Gew.-ppm (bezogen auf die gesamte Reaktionsmasse)

Ebenfalls ist Dodecasäure auch bei Reaktionstemperatur fest, das erfordert auch hier den Einsatz eines Lösemittels.

Das nach Umsetzung erhaltene Produktgemisch hatte die folgende Zusammensetzung:

| TMOS | DYN M | AGE | cis-iso-AGE | trans-iso-AGE | iso-GLYMO | cyclo-GLYMO | GLYMO | HS |
|---|---|---|---|---|---|---|---|---|
| [%] | [%] | [%] | [%] | [%] | [%] | [%] | [%] | [%] |
| 1,0 | 0,6 | 1,7 | 6,4 | 4,2 | 0,7 | 0,03 | 83,3 | 1,0 |

Das Ergebnis des Vergleichsversuchs zeigt, dass hier Selektivität und Umsatz rückläufig sind, vgl. iso-GLYMO und Ausbeute GLYMO.

### Beispiel 1:

Mit Zusatz von 2-Ethylhexansäure
- ohne Lösemittel
- 2-EHsre.-Konz. = 0,23 Gew.-% (bezogen auf die gesamte Reaktionsmasse)
- AGE/TMOS [mol/mol] = 1,2/1
- Pt-Konz. = 2 Gew.-ppm (bezogen auf die gesamte Reaktionsmasse)

Das nach Umsetzung erhaltene Produktgemisch hatte die folgende Zusammensetzung:

| TMOS | DYN M | AGE | cis-iso-AGE | trans-iso-AGE | iso-GLYMO | cyclo-GLYMO | GLYMO | HS |
|---|---|---|---|---|---|---|---|---|
| [%] | [%] | [%] | [%] | [%] | [%] | [%] | [%] | [%] |
| 0,03 | 0,5 | 1,7 | 6,1 | 3,2 | 0,4 | 0,1 | 86,6 | 1,0 |

### Beispiel 2:

Mit Zusatz von 2-Ethylhexansäure
- Ohne Lösemittel
- 2-EHsre.-Konz. = 1,2 Gew.-% (bezogen auf die gesamte Reaktionsmasse)
- AGE/TMOS [mol/mol] = 1,07/1
- Pt-Konz. = 2 Gew.-ppm (bezogen auf die gesamte Reaktionsmasse)

Das nach Umsetzung erhaltene Produktgemisch hatte die folgende Zusammensetzung:

| TMOS | DYN M | AGE | cis-iso-AGE | trans-iso-AGE | iso-GLYMO | cyclo-GLYMO | GLYMO | HS |
|---|---|---|---|---|---|---|---|---|
| [%] | [%] | [%] | [%] | [%] | [%] | [%] | [%] | [%] |
| 2,4 | 1,5 | 0,5 | 5,7 | 2,1 | 0,1 | 0,1 | 85,0 | 1,9 |

### Beispiel 3:

Mit Zusatz von 2-Ethylhexansäure
- Ohne Lösemittel
- 2-EHsre.-Konz. = 0,24 Gew.-% (bezogen auf die gesamte Reaktionsmasse)
- AGE/TMOS [mol/mol] = 1,12/1
- Pt-Konz. = 2,2 Gew.-ppm (bezogen auf die gesamte Reaktionsmasse)

Das nach Umsetzung erhaltene Produktgemisch hatte die folgende Zusammensetzung:

| TMOS | DYN M | AGE | cis-iso-AGE | trans-iso-AGE | iso-GLYMO | cyclo-GLYMO | GLYMO | HS |
|---|---|---|---|---|---|---|---|---|
| [%] | [%] | [%] | [%] | [%] | [%] | [%] | [%] | [%] |
| 1,4 | 0,8 | 0,4 | 5,9 | 2,9 | 0,3 | 0,1 | 86,5 | 1,1 |

### Beispiel 4:

Mit Zusatz von 2-Ethylhexansäure
- Ohne Lösemittel
- 2-EHsre.-Konz. = 1,2 Gew.-% (bezogen auf die gesamte Reaktionsmasse)
- AGE/TMOS [mol/mol] = 1,07/1
- Pt-Konz. = 2 Gew.-ppm (bezogen auf die gesamte Reaktionsmasse)

Das nach Umsetzung erhaltene Produktgemisch hatte die folgende Zusammensetzung:

| TMOS | DYN M | AGE | cis-iso-AGE | trans-iso-AGE | iso-GLYMO | cyclo-GLYMO | GLYMO | HS |
|---|---|---|---|---|---|---|---|---|
| [%] | [%] | [%] | [%] | [%] | [%] | [%] | [%] | [%] |
| 2,4 | 1,5 | 0,5 | 5,7 | 2,1 | 0,1 | 0,1 | 85,0 | 1,9 |

### Beispiel 5:

Mit Zusatz von 2-Ethylhexansäure
- Ohne Lösemittel
- 2-EHsre.-Konz. = 0,22 Gew.-% (bezogen auf die gesamte Reaktionsmasse)
- AGE/TMOS [mol/mol] = 1,2/1
- Pt-Konz. = 4,3 Gew.-ppm (bezogen auf die gesamte Reaktionsmasse)

Das nach Umsetzung erhaltene Produktgemisch hatte die folgende Zusammensetzung:

| TMOS | DYN M | AGE | cis-iso-AGE | trans-iso-AGE | iso-GLYMO | cyclo-GLYMO | GLYMO | HS |
|---|---|---|---|---|---|---|---|---|
| [%] | [%] | [%] | [%] | [%] | [%] | [%] | [%] | [%] |
| 0,5 | 0,5 | 2,4 | 5,9 | 3,2 | 0,4 | 0,05 | 84,6 | 1,4 |

### Beispiel 6:

Mit Zusatz von 2-Ethylhexansäure
- Ohne Lösemittel
- 2-EHsre.-Konz. = 0,47 Gew.-% (bezogen auf die gesamte Reaktionsmasse)
- AGE/TMOS [mol/mol] = 1,12/1
- Pt-Konz. = 2,2 Gew.-ppm (bezogen auf die gesamte Reaktionsmasse)

Das nach Umsetzung erhaltene Produktgemisch hatte die folgende Zusammensetzung:

| TMOS | DYN M | AGE | cis-iso-AGE | trans-iso-AGE | iso-GLYMO | cyclo-GLYMO | GLYMO | HS |
|---|---|---|---|---|---|---|---|---|
| [%] | [%] | [%] | [%] | [%] | [%] | [%] | [%] | [%] |
| 1,1 | 0,6 | 0,2 | 6,1 | 2,4 | 0,2 | 0,1 | 87,7 | 1,0 |

### Beispiel 7:

Mit Zusatz von 3,5,5,-Trimetylhexansäure (Isononansäure)
- Ohne Lösemittel
- Isononansre.-Konz. = 0,60 Gew.-% (bezogen auf die gesamte Reaktionsmasse)
- AGE/TMOS [mol/mol] = 1,2/1
- Pt-Konz. = 2,1 Gew.-ppm (bezogen auf die gesamte Reaktionsmasse)

Das nach Umsetzung erhaltene Produktgemisch hatte die folgende Zusammensetzung:

| TMOS | DYN M | AGE | cis-iso-AGE | trans-iso-AGE | iso-GLYMO | cyclo-GLYMO | GLYMO | HS |
|---|---|---|---|---|---|---|---|---|
| [%] | [%] | [%] | [%] | [%] | [%] | [%] | [%] | [%] |
| 0,3 | 0,4 | 1,2 | 7,3 | 2,8 | 0,2 | 0,1 | 86,1 | 1,1 |

### Beispiel 8:

Mit Zusatz von 3,5,5,-Trimetylhexansäure (Isononansäure)
- Ohne Lösemittel
- Isononansre.-Konz. = 0,48 Gew.-% (bezogen auf die gesamte Reaktionsmasse)
- AGE/TMOS [mol/mol] = 1,19/1
- Pt-Konz. = 2,3 Gew.-ppm (bezogen auf die gesamte Reaktionsmasse)

Das nach Umsetzung erhaltene Produktgemisch hatte die folgende Zusammensetzung:

| TMOS | DYN M | AGE | cis-iso-AGE | trans-iso-AGE | iso-GLYMO | cyclo-GLYMO | GLYMO | HS |
|---|---|---|---|---|---|---|---|---|
| [%] | [%] | [%] | [%] | [%] | [%] | [%] | [%] | [%] |
| 0,3 | 0,5 | 0,7 | 7,2 | 3,2 | 0,2 | 0,1 | 85,9 | 1,2 |

### Zusammenfassung der Versuchsergebnisse:

Gemäß den Beispielen, bei denen 2-Ethylhexansäure sowie Isononansäure als Promotoren für die Umsetzung eingesetzt wurden, konnten ausgezeichnete Selektivitäten und zumindest vergleichbare, teilweise nochmals deutlich verbesserte Umsatzraten erzielt werden. Insbesondere sind so erhaltene Produkt vorteilhaft frei von nachteilig aciden Anteilen, insbesondere frei von Essigsäure und weisen darüber hinaus praktisch keine Anteile an organischem Lösemittel, wie Toluol, Xylol oder anderen Kohlenwasserstoffen auf.

## Patentansprüche

1. Verfahren zur Herstellung von 3-Glycidyloxypropylalkoxysilanen der allgemeinen Formel (I)
(R')O-(CH₂)₃-Si(OR)₃ (I),
worin Gruppen R unabhängig für eine Methyl- oder Ethylgruppe stehen und R' eine Gruppe H₂C(O)CHCH₂- darstellt,
indem man
(i) ein funktionalisiertes Alken der allgemeinen Formel (II)
(R')O-C₃H₅ (II),
worin R' eine Gruppe H₂C(O)CHCH₂- darstellt,
mit
(ii) mindestens einem Hydrogenalkoxysilan der allgemeinen Formel (III)
HSi(OR)₃ (III),
worin Gruppen R unabhängig für eine Methyl- oder Ethylgruppe stehen, vorzugsweise Hydrogentrimethoxysilan oder Hydrogentriethoxysilan,
in Gegenwart
(iii) eines Karstedt-Katalysators oder eines Katalysators auf Basis von Hexachlorplatinsäure als Homogenkatalysator und
(iv) von 2-Ethylhexansäure und/oder Isononansäure
umsetzt und
das Produkt der Hydrosilylierung gewinnt.

2. Verfahren nach Anspruch 1,
**dadurch gekennzeichnet,**
**dass** man die Olefinkomponente gemäß (i) und das Hydrogenalkoxysilan gemäß (ii) in einem molaren Verhältnis von 0,8 bis 1,3 zu 1, vorzugsweise 1,03 bis 1,25 zu 1, besonders vorzugsweise 1,07 bis 1,22 zu 1, ganz besonders vorzugsweise 1,10 bis 1,19 zu 1, insbesondere von 1,12 bis 1,17 zu 1,0 einsetzt.

3. Verfahren nach Anspruch 1 oder 2,
**dadurch gekennzeichnet,**
**dass** man den Karstedt-Katalysator gemäß (iii) als solchen (Platinum(0)-1,3-divinyl-1,1,3,3-tetramethyldisiloxan-Komplex; O[Si(CH₃)₂CH=CH₂]₂Pt) oder Hexachlorplatinsäure (H₂[PtCl₆], auch Speier-Katalysator genannt) und ohne den Zusatz bzw. die Verwendung eines zusätzlichen Lösemittels einsetzt.

4. Verfahren nach einem der Ansprüche 1 bis 3,
**dadurch gekennzeichnet,**
**dass** man den Katalysator gemäß (iii) bzgl. seines Pt-Gehalts zur Olefinkomponente gemäß (i) in einem molaren Verhältnis von 1 : 2 000 000 bis 1 : 50 000, vorzugsweise 1 : 1 000 000 bis 1 : 100 000, besonders vorzugsweise 1 : 750 000 bis 1 : 150 000, insbesondere von 1 : 600 000 bis 1 : 300 000, einsetzt.

5. Verfahren nach einem der Ansprüche 1 bis 4,
**dadurch gekennzeichnet,**
**dass** man den Pt-Anteil des Katalysators gemäß (iii) und die 2-Ethylhexansäure und/oder Isononansäure als Promotor(en) gemäß (iv) in einem molaren Verhältnis von 1 : 250 bis 1 : 25 000, vorzugsweise 1 : 500 bis 1 : 10 000, insbesondere 1 : 1 000 bis 1 : 5 000, einsetzt.

6. Verfahren nach einem der Ansprüche 1 bis 5,
**dadurch gekennzeichnet,**
**dass** man
- gemäß der Verfahrensvariante A die Komponenten (i), (ii), (iii) und (iv) vormischt, einem Reaktor bzw. Reaktorsystem zur Durchführung der Reaktion zuführt und unter Durchmischung auf eine Reaktionstemperatur aufheizt oder
- gemäß der Verfahrensvariante B die Komponenten gemäß (i), (iii) und (iv) in einem Reaktor bzw. Reaktorsystem vorlegt bzw. diesem zuführt, unter Durchmischung auf eine Reaktionstemperatur aufheizt und Komponente (ii) unter Durchmischung zudosiert oder
- gemäß der Verfahrensvariante C die Komponenten gemäß (i) und (ii) in einem Reaktor bzw. Reaktorsystem vorlegt bzw. diesem zuführt, unter Durchmischung auf eine Reaktionstemperatur aufheizt und die Komponenten (iii) und (iv) als solche oder als Gemisch unter Durchmischung zudosiert oder
- gemäß der Verfahrensvariante D die Komponenten gemäß (ii), (iii) und (iv) und in einem Reaktor bzw. Reaktorsystem vorlegt bzw. diesem zuführt, unter Durchmischung auf eine Reaktionstemperatur aufheizt und die Komponente (i) unter Durchmischung zudosiert.

7. Verfahren nach einem der Ansprüche 1 bis 6,
**dadurch gekennzeichnet,**
**dass** man die Umsetzung in einem Reaktor bei einer Reaktionstemperatur zwischen 80 und 230°C, vorzugsweise 100 bis 200°C, einem Druck von 0,5 und 20 bar abs., vorzugsweise 0,5 bis 4 bar abs., insbesondere bei Umgebungsdruck durchführt.

8. Verfahren nach einem der Ansprüche 1 bis 7,
**dadurch gekennzeichnet,**
**dass** man das Umsetzungsprodukt aufarbeitet, wobei man das nach der Umsetzung erhaltene Produktgemisch zur Gewinnung des Zielprodukts fraktioniert destilliert.

9. Verfahren nach einem der Ansprüche 1 bis 8,
**dadurch gekennzeichnet,**
**dass** man die Umsetzung und Aufarbeitung batchweise oder kontinuierlich durchführt.

10. Verfahren nach einem der Ansprüche 1 bis 9,
**dadurch gekennzeichnet,**
**dass** man 3-Glycidyloxypropyltrimethoxysilan oder 3-Glycidyloxypropyltriethoxysilan in Essig- bzw. Acetoxy-freier Form gewinnt.

11. Verfahren nach einem der Ansprüche 1 bis 10,
**dadurch gekennzeichnet,**
**dass** man 3-Glycidyloxypropyltrimethoxysilan oder 3-Glycidyloxypropyltriethoxysilan gewinnt, wobei das gewonnene Produkt einen pH-Wert von 3,5 bis 5,5, vorzugsweise 4 bis 5, aufweist.

12. Verfahren nach einem der Ansprüche 1 bis 11,
**dadurch gekennzeichnet,**
**dass** man 3-Glycidyloxypropyltrimethoxysilan oder 3-Glycidyloxypropyltriethoxysilan gewinnt, wobei das gewonnene Produkt einen Leitfähigkeitswert von ≤10 µS/cm, vorzugsweise 0,0001 bis ≤ 0,005 mS/cm, besonders vorzugsweise 0,001 bis ≤ 0,004 mS/cm, aufweist.

## Claims

1. Process for preparing 3-glycidyloxypropylalkoxysilanes of the general formula (I)
(R')O-(CH₂)₃-Si(OR)₃ (I)
in which R groups are independently a methyl or ethyl group and R' represents an H₂C(O)CHCH₂-group,
by reacting
(i) a functionalized alkene of the general formula (II)
(R')O-C₃H₅ (II)
in which R' represents an H₂C(O)CHCH₂- group with
(ii) at least one hydroalkoxysilane of the general formula (III)
HSi(OR)₃ (III)
in which R groups are independently a methyl or ethyl group, preferably hydrotrimethoxysilane or hydrotriethoxysilane,
in the presence of
(iii) a Karstedt catalyst or a catalyst based on hexachloroplatinic acid as homogeneous catalyst and
(iv) 2-ethylhexanoic acid and/or isononanoic acid and
obtaining the product of the hydrosilylation.

2. Process according to Claim 1,
**characterized in that**
the olefin component (i) and the hydroalkoxysilane (ii) are used in a molar ratio of 0.8 to 1.3:1, preferably 1.03 to 1.25:1, more preferably 1.07 to 1.22:1, even more preferably 1.10 to 1.19:1, especially 1.12 to 1.17:1.0.

3. Process according to Claim 1 or 2,
**characterized in that**
the Karstedt catalyst (iii) as such (platinum(0) 1,3-divinyl-1,1,3,3-tetramethyldisiloxane complex; O[Si(CH₃)₂CH=CH₂]₂Pt) or hexachloroplatinic acid (H₂[PtCl₆], also called Speier catalyst) is used without the addition or use of any additional solvent.

4. Process according to any of Claims 1 to 3,
**characterized in that**
the catalyst (iii) on the basis of its Pt content is used in a molar ratio relative to the olefin component (i) of 1:2 000 000 to 1:50 000, preferably 1:1 000 000 to 1:100 000, more preferably 1:750 000 to 1:150 000, especially of 1:600 000 to 1:300 000.

5. Process according to any of Claims 1 to 4,
**characterized in that**
the Pt content of the catalyst (iii) and the 2-ethylhexanoic acid and/or isononanoic acid as promoter(s) (iv) are used in a molar ratio of 1:250 to 1:25 000, preferably 1:500 to 1:10 000, especially 1:1000 to 1:5000.

6. Process according to any of Claims 1 to 5,
**characterized in that**
- in process variant A, components (i), (ii), (iii) and (iv) are premixed, fed to a reactor or reactor system for performance of the reaction and heated to a reaction temperature while mixing, or
- in process variant B, components (i), (iii) and (iv) are initially charged in or fed to a reactor or reactor system and heated to a reaction temperature while mixing, and component (ii) is metered in while mixing, or
- in process variant C, components (i) and (ii) are initially charged in or fed to a reactor or reactor system and heated to a reaction temperature while mixing, and components (iii) and (iv) are metered in as such or as a mixture while mixing, or
- in process variant D, components (ii), (iii) and (iv) are initially charged in or fed to a reactor or reactor system and heated to a reaction temperature while mixing, and component (i) is metered in while mixing.

7. Process according to any of Claims 1 to 6,
**characterized in that**
the reaction is conducted in a reactor at a reaction temperature between 80 and 230°C, preferably 100 to 200°C, and a pressure of 0.5 to 20 bar abs., preferably 0.5 to 4 bar abs., especially at ambient pressure.

8. Process according to any of Claims 1 to 7,
**characterized in that**
the reaction product is worked up by fractional distillation of the product mixture obtained after the reaction to obtain the target product.

9. Process according to any of Claims 1 to 8,
**characterized in that**
the reaction and workup are conducted batchwise or continuously.

10. Process according to any of Claims 1 to 9,
**characterized in that** 3-glycidyloxypropyltrimethoxysilane or 3-glycidyloxypropyltriethoxysilane is obtained in acetic acid- or acetoxy-free form.

11. Process according to any of Claims 1 to 10,
**characterized in that** 3-glycidyloxypropyltrimethoxysilane or 3-glycidyloxypropyltriethoxysilane is obtained, the product obtained having a pH of 3.5 to 5.5, preferably 4 to 5.

12. Process according to any of Claims 1 to 11,
**characterized in that** 3-glycidyloxypropyltrimethoxysilane or 3-glycidyloxypropyltriethoxysilane is obtained, the product obtained having a conductivity value of ≤ 10 µS/cm, preferably 0.0001 to ≤ 0.005 mS/cm, more preferably 0.001 to ≤ 0.004 mS/cm.

## Revendications

1. Procédé pour la préparation de 3-glycidyloxypropylalcoxysilanes de formule générale (I)
**(R')O-(CH₂)₃-Si(OR)₃** **(I),**
dans laquelle les groupes R représentent indépendamment un groupe méthyle ou éthyle et R' représente un groupe H₂C(O)CHCH₂-,
par le fait qu'on transforme
(i) un alcène fonctionnalisé de formule générale (II)
**(R')O-C₃H₅** **(II),**
dans laquelle R' représente un groupe H₂C(O)CHCH₂-,
avec
(ii) au moins un hydrogénoalcoxysilane de formule générale (III)
**HSi(OR)₃** **(III),**
dans laquelle les groupes R représentent indépendamment un groupe méthyle ou éthyle, de préférence hydrogénotriméthoxysilane ou hydrogénotriéthoxysilane,
en présence
(iii) d'un catalyseur de Karstedt ou d'un catalyseur à base d'acide hexachloroplatinique en tant que catalyseur homogène et
(iv) d'acide 2-éthylhexanoïque et/ou d'acide isononanoïque et
qu'on obtient le produit de l'hydrosilylation.

2. Procédé selon la revendication 1,
**caractérisé en ce qu'**on utilise le composant d'oléfine selon (i) et l'hydrogénoalcoxysilane selon (ii) en un rapport molaire de 0,8 jusqu'à 1,3 à 1, préférablement de 1,03 jusqu'à 1,25 à 1, particulièrement préférablement de 1,07 jusqu'à 1,22 à 1, très particulièrement préférablement de 1,10 jusqu'à 1,19 à 1, en particulier de 1,12 jusqu'à 1,17 à 1,0.

3. Procédé selon la revendication 1 ou 2,
**caractérisé en ce qu'**on utilise le catalyseur de Karstedt selon (iii) en tant que tel (complexe platine (0)-1,3-divinyl-1,1,3,3-tétraméthyldisiloxane ; O[Si(CH₃)₂CH=CH₂]₂Pt) ou l'acide hexachloroplatinique (H₂[PtCl₆], également appelé catalyseur de Speier) et sans l'ajout ou, selon le cas, l'utilisation d'un solvant supplémentaire.

4. Procédé selon l'une quelconque des revendications 1 à 3,
**caractérisé en ce qu'**on utilise le catalyseur selon (iii), en ce qui concerne sa teneur en Pt par rapport au composant d'oléfine selon (i) en un rapport molaire de 1:2.000.000 à 1:50.000, préférablement de 1:1.000.000 à 1:100.000, particulièrement préférablement de 1:750.000 à 1:150.000, en particulier de 1:600.000 à 1:300.000.

5. Procédé selon l'une quelconque des revendications 1 à 4,
**caractérisé en ce qu'**on utilise
la partie Pt du catalyseur selon (iii) et l'acide 2-éthylhexanoïque et/ou l'acide isononanoïque en tant que promoteur(s) selon (iv) en un rapport molaire de 1:250 à 1:25.000, préférablement de 1:500 à 1:10.000, en particulier de 1:1000 à 1:5000.

6. Procédé selon l'une quelconque des revendications 1 à 5,
**caractérisé en ce que**
- selon la variante de procédé A on mélange au préalable les composants (i), (ii), (iii) et (iv), on les introduit dans un réacteur ou, selon le cas, dans un système de réacteurs pour la réalisation de la réaction et on les chauffe à une température de réaction en mélangeant ou
- selon la variante de procédé B on dispose au préalable ou, selon le cas, on introduit les composants (i), (iii) et (iv) dans un réacteur ou, selon le cas, dans un système de réacteurs, on les chauffe à une température de réaction en mélangeant et on ajoute en mélangeant le composant (ii) ou
- selon la variante de procédé C, on dispose au préalable ou, selon le cas, on introduit les composants (i) et (ii) dans un réacteur ou, selon le cas, dans un système de réacteurs, on les chauffe à une température de réaction en mélangeant et on ajoute en mélangeant les composants (iii) et (iv) en tant que tel ou en mélange ou
- selon la variante de procédé D on dispose au préalable ou, selon le cas, on introduit les composants (ii), (iii) et (iv) dans un réacteur ou, selon le cas, dans un système de réacteurs, on les chauffe à une température de réaction en mélangeant et on ajoute en mélangeant le composant (i).

7. Procédé selon l'une quelconque des revendications 1 à 6,
**caractérisé en ce qu'**on réalise la transformation dans un réacteur à une température de réaction entre 80 et 230°C, préférablement entre 100 et 200°C, à une pression de 0,5 à 20 bars absolus, préférablement de 0,5 à 4 bars absolus, en particulier à pression ambiante.

8. Procédé selon l'une quelconque des revendications 1 à 7,
**caractérisé en ce qu'**on traite le produit de transformation, c'est-à-dire qu'on soumet le mélange de produits obtenu après la transformation à une distillation fractionnée pour l'obtention du produit cible.

9. Procédé selon l'une quelconque des revendications 1 à 8,
**caractérisé en ce qu'**on réalise la transformation et le traitement en lots ou de manière continue.

10. Procédé selon l'une quelconque des revendications 1 à 9,
**caractérisé en ce qu'**on obtient le 3-glycidyloxypropyltriméthoxysilane ou le 3-glycidyloxypropyltriéthoxysilane sous forme exempte d'acide acétique ou d'acétoxyle.

11. Procédé selon l'une quelconque des revendications 1 à 10,
**caractérisé en ce qu'**on obtient le 3-glycidyloxypropyltriméthoxysilane ou le 3-glycidyloxypropyltriéthoxysilane, le produit obtenu présentant une valeur de pH de 3,5 à 5,5, préférablement de 4 à 5.

12. Procédé selon l'une quelconque des revendications 1 à 11,
**caractérisé en ce qu'**on obtient le 3-glycidyloxypropyltriméthoxysilane ou le 3-glycidyloxypropyltriéthoxysilane, le produit obtenu présentant une valeur de conductivité ≤ 10 µS/cm, préférablement de 0,0001 à ≤ 0,005 mS/cm, particulièrement préférablement 0,001 à ≤ 0,004 mS/cm.
